Europäisches Patentamt

European Patent Office

Office européen des brevets

(11) Numéro de publication: **0 141 764**
A2

## (12) DEMANDE DE BREVET EUROPEEN

(21) Numéro de dépôt: 84420178.0

(22) Date de dépôt: 17.10.84

(51) Int. Cl.⁴: **B 32 B 27/36**, B 32 B 31/08, G 11 B 5/62

(30) Priorité: 19.10.83 BR 8305832

(43) Date de publication de la demande: 15.05.85 Bulletin 85/20

(84) Etats contractants désignés: DE FR GB IT LU NL

(71) Demandeur: RHONE-POULENC FILMS, 25, quai Paul Doumer, F-92408 Courbevoie (FR)

(72) Inventeur: Vighi, Cristiano Alberto, Rua Afonso Calso, 143 apto 62, Sao Paulo (BR)

(74) Mandataire: Chichery, Guy et al, RHONE-POULENC RECHERCHES Service Brevets Chimie et Polymères Centre de Recherches de Saint-Fons B.P. 62, F-69192 St-Fons Cédex (FR)

(54) Procede pour la fabrication de films lamines colores - films lamines colores - et usage de tels films comme amorces.

(57) L'invention concerne:
— un procédé pour obtenir, par collage au moyen d'adhésif, un film complexe coloré constitué par 2 couches de polyester adhérant l'une à l'autre par une couche adhésive contenant des pigments colorés
— les film obtenus par le procédé
— l'utilisation des films précédents en tant qu'amorce de bande magnétique.

### PROCEDE POUR LA FABRICATION DE FILMS LAMINES COLORES – FILMS LAMINES COLORES – ET USAGE DE TELS FILMS COMME AMORCES

La présente invention concerne un procédé pour joindre et colorer au moins deux films de polyester, grâce à l'emploi approprié d'une solution contenant une colle, un pigment et un solvant.

Une des méthodes classiques pour obtenir une amorce colorée pour bandes enregistreuses pour cassettes, consiste à teindre la masse pendant l'extrusion.

Particulièrement, lorsqu'il s'agit de produire des quantités relativement faibles, la production de films colorés, combinée à celle de films normaux, provoque des complications extrêmes dans le procédé par suite des longues périodes d'interruption, requises pour le nettoyage de toute la ligne, depuis l'extrudeuse jusqu'au point d'enroulement du film.

Une autre solution pour obtenir un film de polyester coloré consisterait à appliquer un pigment sur l'une de ses faces, mais cette opération présente les inconvénients suivants :

- coloration de la face intérieure : usure du pigment par frottement sur les galets latéraux de la cassette, l'enregistrement étant alors gêné par la matière pulvérulente ainsi détachée ;

- coloration de la face extérieure : usure du pigment par frottement sur la tête d'enregistrement, ce qui gêne également l'enregistrement. Cette usure produit de l'électricité statique, ce qui nuit très fortement à la qualité de l'enregistrement.

Le demandeur a résolu ces problèmes en utilisant deux films couvrant une couche de pigment et de colle ; il en résulte que le pigment est protégé par les deux films extérieurs de polyester et que l'usure de cette couche est impossible, tant par les galets latéraux de la cassette que par la tête d'enregistrement.

Un but de la présente invention est de proposer un procédé pour la fabrication à sec d'un film de polyester laminé coloré.

Un autre but est l'utilisation d'un film de polyester laminé coloré comme amorce pour les bandes enregistreuses.

La procédé comprend essentiellement les étapes de :

a) la mise en contact d'un premier film de polyester et d'une solution contenant, de préférence, des solvants, des pigments (inorganiques ou organiques tels que des amines aromatiques...), et des colles, préconisées pour les polyesters (monocomposant, bicomposant tels que polyisocyanate + prépolymère de polyuréthanne...)

b) faire passer le premier film de polyester dans des dispositifs de chauffage ;

c) faire passer le premier film de polyester dans des dispositifs de chauffage qui égalisent la température de ce second film de polyester et celle du premier film de polyester ;

d) calandrer à chaud les deux films de polyester à une température comprise, de préférence, entre 60 et 90°C ;

e) refroidir le complexe laminé ;

f) enrouler le complexe laminé.

Eventuellement, les opérations ci-dessus pourraient être répétées autant de fois que cela peut être nécessaire suivant la quantité de pellicule mise en jeu, et du film coloré à plusieurs couches devant être produit.

Les pellicules de polyester utilisées peuvent présenter des épaisseurs égales ou différentes.

Dans une application particulière de la présente invention, on peut utiliser comme colle, pigment et solvant, respectivement HENKEL BR 660 + BR 100, "BAYER" type "CERES" et l'acétate d'éthyle.

Les quantités utilisées de préférence, pour $1000m^2$ de film obtenu, seraient de 3-4 kg de colle, 6-8 g de pigment, 3-4 kg de solvant.

Selon un autre objet de la présente invention la demanderesse revendique les films constitués par deux couches de polyester adhérent l'une à l'autre par une autre couche contenant des pigments colorés et un adhésif.

Pour une utilisation plus spécifique de l'invention, le film laminé double aurait avantageusement une épaisseur de 30 microns.

Comme exemple de dispositif de chauffage, on peut mentionner un four.

Le film produit est utilisé, de préférence, comme amorce de bandes enregistreuses pour cassettes.

L'exemple ci-dessous décrit un usage particulier du procédé, de manière à décrire l'invention.

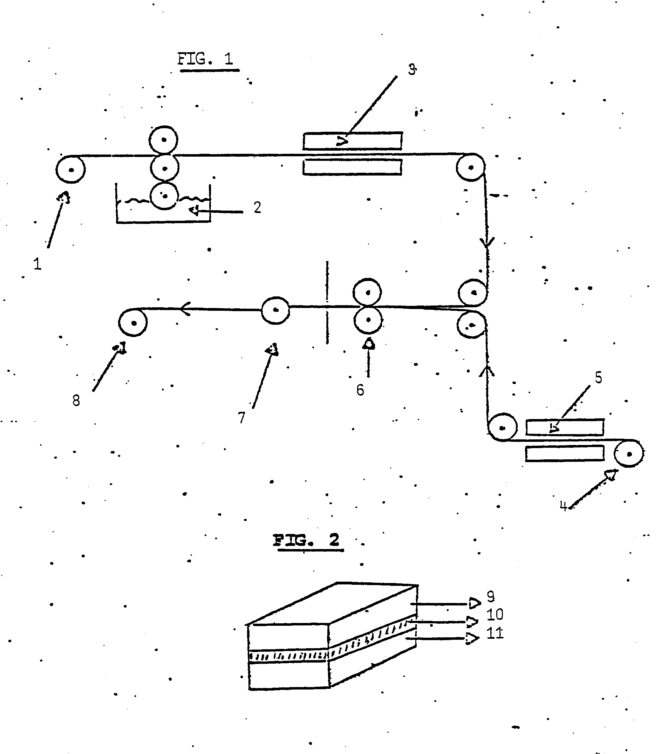

Conformément au schéma représenté à la figure 1, il existe les étages de :

1) dérouler la bobine (1) contenant un film de polyester de 18 microns.

2) faire passer le film de polyester dans une solution (2) à température ambiante, contenant les quantités suivantes pour 1000 m2 de film sec :

   - 3 kg de colle "HENKEL" type BR 660 + BR 100
   - 6 g de pigment "BAYER" type "Ceres"
   - 4 kg d'acétate d'éthyle

3) sécher la colle par passage dans le four (3), qui comporte trois zones de température :

   - 1ère zone :   70°C
   - 2ème zone :   80°C
   - 3ème zone :   100°C

4) dérouler la bobine (4) contenant un film de polyester de 12 microns

5) chauffer à 100°C dans un four (5) pour atteindre la température du film provenant de la bobine (1)

6) calandrer à chaud à 100°C dans le calandreur (6)

7) refroidir le complexe laminé à 30°C sur le rouleau refroidi (7)

8) enrouler le film laminé sur la bobine (8)

La figure 2 représente le produit laminé obtenu finalement.

4

## REVENDICATIONS

1 - Procédé pour la fabrication d'un film laminé coloré, caractérisé en ce qu'il comprend les opérations suivantes :

a) mettre un premier film de polyester au contact d'une solution contenant un solvant, un pigment et une colle,

b) faire passer le premier film de polyester dans des dispositifs de chauffage,

c) faire passer un second film de polyester dans des dispositifs de chauffage, qui égalisent la température de ce second film de polyester et celle du premier film de polyester,

d) calandrer à chaud les deux films de polyester

e) refroidir le complexe laminé

f) enrouler le complexe laminé

2 - Procédé pour la fabrication d'un film laminé coloré selon la revendication 1, caractérisé en ce que la colle est, la colle "Henkel" type BR 660 + BR 100.

3 - Procédé pour la fabrication d'un film laminé coloré selon la revendication 1, caractérisé en ce que le pigment est, le "Bayer" type "Ceres".

4 - Procédé pour la fabrication d'un film laminé coloré selon la revendication 1, caractérisé en ce que le solvant est, de l'acétate d'éthyle.

5 - Procédé pour la fabrication d'un film laminé coloré selon la revendication 1, caractérisé en ce que les quantités utilisées pour 1 000 m2 de film sont, 3 à 4 kg de colle, 6 à 8 g de pigment et 3 à 4 kg de solvant.

6 - Procédé pour la fabrication d'un film laminé coloré selon la revendication 1, caractérisé en ce que les dispositifs de chauffage comportent, trois zones de température :
- la première zone variant de 50 à 80°C
- la seconde zone variant de 70 à 100°C
- la troisième zone variant de 70 à 100°C

7 - Procédé pour la fabrication d'un film laminé coloré selon la revendication 1, permettant de produire avantageusement un film de 30 microns à partir d'un film de 12 microns et d'un film de 18 microns.

8 - Procédé pour la fabrication d'un film laminé coloré selon la revendication 1, caractérisé en ce que le cycle des opérations peut être répété, de façon à permettre l'obtention d'un film laminé coloré à couches multiples.

9 - Films obtenus selon un procédé défini dans l'une des revendications 1 à 8 et constitué par 2 couches de polyester adhérant l'une à l'autre, par une autre couche contenant des pigments colorés et un adhésif.

10 - Amorce pour cassette constituée par un film laminé coloré tel que défini dans la revendication 9 ou obtenu selon un procédé défini dans l'une des revendications 1 à 8.

PLANCHE UNIQUE

0141764

FIG. 1

FIG. 2